# EUROPEAN PATENT APPLICATION

(11) **EP 2 508 541 A1**
(43) Date of publication of application: **10.10.2012**
(21) Application number: 12163645.0
(22) Date of filing: 10.04.2012
(51) Int. Cl.: C08F 220/06, C08F 220/18, C08K 13/02, C08L 33/06, C08K 3/22, C08K 5/00, C08K 5/103, C08K 5/14, C08K 5/37, C08K 5/5419, C08K 5/5425, C08L 33/08, C08L 33/12

(54) **Process for making a composite material**

(30) Priority: 06.04.2011 IT BO20110179
(71) Applicant: TEUCO GUZZINI S.p.A., Montelupone (IT)
(72) Inventor: The designation of the inventor has not yet been filed
(74) Representative: Jorio, Paolo

(57) **Abstract**

Process of making a composite material; according to the process a composition is polymerized comprising from 20% to 30% of methyl methacrylate; from 5% to 15% of poly-methyl methacrylate; from 55% to 65% of inorganic particles, which have a median diameter (D[v,0.5]) from 9µm to 60µm; from 0.2% to 1.5% of an organic peroxide; from 0.005% to 0.1% of ZnO; from 0.5% to 2% of Ca(OH)₂; the calcium and zinc ions act together with the organic peroxide to activate polymerization.

## Description

### TECHNICAL FIELD

The present invention relates to a process of making a composite material, a composite material, an article and a catalyst mixture.

### BACKGROUND OF THE INVENTION

In the field of moulded articles (in particular for manufacturing products for furnishing bathrooms and kitchens) the need exists to provide products obtained with natural or conventional products such as stone and marble. This leads to the tendency to produce composite materials with prestigious aesthetics, but with the aid of simple technologies, such as those used in the conversion of plastic materials.

Usually, these articles are obtained by polymerizing dispersions (liquid) of methacrylic resins and mineral fillers (in particular aluminium trihydrate). The polymerization takes place subsequently to a cast moulding process and (ideally) should require initiation at ambient temperature and peak temperatures that are not too high.

In the past, various catalyst systems have been proposed, each having specific problems, such as: low polymerization speed, incomplete polymerization; excessive heat development and/or production of articles of poor quality.

In particular, the patent application with publication number WO96/26977 describes (see in particular Table 1 on Page 5) a catalyst system comprising peroxide (tert-butyl peroxymaleate), an agent for chain transfer (glycol dimercaptoacetate - GDMA) and calcium hydroxide.

The patent US3362942 cites some alternatives to calcium hydroxide and, in particular, carbonates of sodium, potassium or zinc; acetates of sodium, potassium, copper, strontium, magnesium, manganese; acid phthalates, bicarbonates, phosphates, sulphates, etc. of sodium and potassium (column 3, lines 1-7).

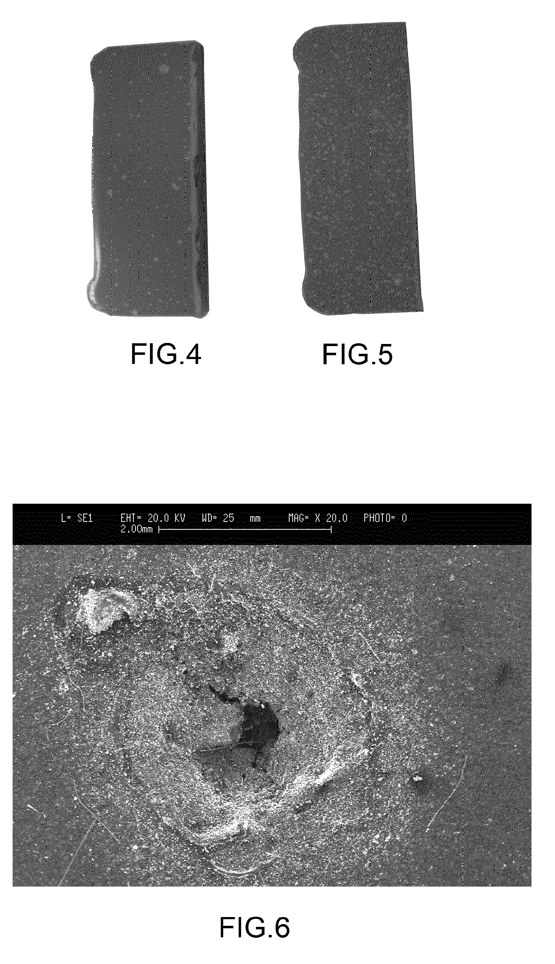

Unfortunately, the catalyst systems proposed in these two documents also have one or more of the aforesaid problems. In particular, the system proposed by WO96/26977 leads to the formation of defects that significantly spoil the appearance of the finished article: these are small pure white rounded formations which are empty inside (see appended Fig. 6).

US4935454 discloses a dielectric composition capable of being polymerized for sealing electric and electro-optical connectors and devices.

EP2366731 discloses a process for preparing a composite material that envisages polymerizing a compound comprising a resin, quartz particles and spheroidal particles.

None of the catalyst systems proposed in the state of the art seem to guarantee satisfactory results.

The object of the present invention is to provide a process for making a composite material, a composite material, an article and a catalyst mixture, which enable the problems of prior art to be solved, at least partly, and preferably are, at the same time, easy and inexpensive to implement.

### SUMMARY

According to the present invention, there is provided a process of making a composite material and a composite material according to the independent claims below and, preferably, any one of the claims directly or indirectly dependent on the independent claims.

### BRIEF DESCRIPTION OF THE DRAWINGS

The invention is described below with reference to the accompanying drawings, which show some non-limiting examples of embodiment, wherein:
- Fig. 1 shows a scanning electron microscope photograph of the surface of a material obtained in accordance with the present invention;
- Figs. 2 to 5 and 7 to 9 show samples of material obtained with a method different from that of the present invention; and
- Fig. 6 is a scanning electron microscope photograph of a detail of materials obtained with methods different from that of the present invention.

### EMBODIMENTS OF THE INVENTION

According to a first aspect of the present invention, there is provided a process for making a composite material; the process comprises a step of mixing a composition comprising from 10 wt% to 40 wt%, with respect to the overall weight of the composition, of at least one polymerizable organic monomer; at least 3 wt% (in particular up to 25 wt%), with respect to the overall weight of the composition, of at least one organic polymer; at least 40 wt% (in particular from 45 wt% to 75 wt%), with respect to the overall weight of the composition, of inorganic particles, which have a median diameter (D[v,0.5]) of less than 1mm (in particular, up to 0.1mm); and at least 0.05 wt% (in particular at least 0.1 wt%), with respect to the overall weight of the composition, of at least one crosslinker. The process also comprises a polymerizing step, during which the polymerizable organic monomer polymerizes so as to obtain the composite material. In particular, the polymerizable organic monomer polymerizes together with the crosslinker (and also binding - at least partly - to the organic polymer).

Advantageously, the composition comprises at least 0.04 wt%, with respect to the overall weight of the composition, of at least one silane having at least one vinyl moiety; at least 0.04 wt% (up to 5 wt%, in particular up to 3 wt%), with respect to the overall weight of the composition, of at least one chain transfer agent. It must be noted that, during the polymerizing step the organic monomer reacts (at least partly) with the silane. The silane enables the inorganic particles to be more easily incorporated and bound.

The composition also comprises at least 0.1 wt% (in particular at least 0.2 wt%), with respect to the overall weight of the composition, of organic peroxide; and at least 0.004 wt% (in particular at least 0.005 wt%), with respect to the overall weight of the composition, of ZnO. The peroxide has carboxyl moiety.

The use of ZnO surprisingly enables articles with few (substantially no) surface defects to be obtained (in particular, the white spots mentioned above). In this regard, it is important to stress that other salts of Zn were tested, but none of them exhibited the properties of ZnO.

Advantageously, the composition comprises from 0.0015 wt% to 0.05 wt% (in particular, up to 0.01 wt%), with respect to the overall weight of the composition, of Ca(OH)₂. The calcium hydroxide surprisingly acts synergically together with the zinc oxide to speed up polymerization and thus obtain an article with good mechanical properties without the appearance of the surface defects mentioned above.

Advantageously, the composition comprises from 15 wt% (more precisely from 20 wt%) to 35 wt%, with respect to the overall weight of the composition, of at least one polymerizable organic monomer. In particular, the composition comprises up to 30 wt%, with respect to the overall weight of the composition, of the polymerizable organic monomer.

According to some embodiments, the polymerizable organic monomer comprises at least one acrylic monomer. In particular, the organic monomer is at least one acrylic monomer. More in particular, the organic monomer is one acrylic monomer. In other words, in these cases, the composition comprises from around 10 wt% to around 40 wt% of an acrylic monomer.

The acrylic monomer is selected from alkyl esters of acrylic acid or of methacrylic acid, wherein the alkyl has from one to six carbon atoms.

In particular, the acrylic monomer is selected from the group consisting of: methyl methacrylate (MMA), ethyl methacrylate, propyl methacrylate, butyl methacrylate, methyl acrylate, butyl acrylate. The composition can also comprise more than one type of acrylic monomers (for example, the composition can contain both MMA and ethyl methacrylate); in this case, the percentages by weight indicated above of acrylic monomer with respect to the composition refer to the sum of the quantities of the different types of acrylic monomers.

Moreover, there can also be utilised, in addition to the acrylic monomer(s), further polymerizable organic monomers such as vinyl monomers as, for example, styrol, alpha-methylstyrol, acrylonitrile (see GB 1493393 in this regard). In this case, the percentages by weight indicated above of acrylic monomer with respect to the composition refer to the sum of the quantities of acrylic monomer(s) and of the further monomer(s). The percentage by weight of vinyl monomers with respect to the total weight of the acrylic monomer is, advantageously, less than 50%.

According to some embodiments, the polymerizable organic monomer comprises at least one methacrylic monomer. In particular, the organic monomer is at least one methacrylic monomer. More in particular, the organic monomer is one methacrylic monomer. In other words, in these cases, the composition comprises from around 10 wt% to around 40 wt% of a methacrylic monomer.

The methacrylic monomer is selected from alkyl esters of methacrylic acid, wherein the alkyl has from one to six carbon atoms.

In particular, the methacrylic monomer is selected from the group consisting of: methyl methacrylate (MMA), ethyl methacrylate, propyl methacrylate, butyl methacrylate. The composition can also comprise more than one type of acrylic monomers (for example, the composition can contain both MMA and ethyl methacrylate); in this case, the percentages by weight indicated above of polymerizable organic monomer with respect to the composition refer to the sum of the quantities of the different types of methacrylic monomers.

According to specific embodiments, the polymerizable organic monomer is MMA.

Even when the organic monomer comprises a methacrylic monomer, further organic monomer(s) can be used.

Advantageously, the composition comprises up to 20 wt% (more specifically from 5 wt% to 18 wt%), with respect to the overall weight of the composition, of organic polymer. According to some embodiments, the composition comprises at least 6 wt%, with respect to the overall weight of the composition, of organic polymer. In particular, the composition comprises 15 wt% (more specifically from 7 wt% to 12 wt%), with respect to the overall weight of the composition, of organic polymer.

According to some embodiments, the organic polymer has a molecular weight (PM_{w}) from 100X10³ to 150X10³.

According to some embodiments, the organic polymer comprises (in particular, is) an acrylic polymer.

In the present text, in particular, acrylic polymer is intended as a polymer obtained from the polymerization of (at least) one acrylic monomer as defined above.

According to some embodiments, the acrylic polymer is selected from the group consisting of: polymethyl methacrylate, polyethyl methacrylate, copolymers of methyl methacrylate-methyl acrylate, copolymers of methyl methacrylate-styrene, copolymers of methyl methacrylate-butyl acrylate, copolymers of methyl methacrylate-methacryloxypropyltrimethoxysilane.

According to some embodiments, the organic polymer comprises (in particular, is) a methacrylic polymer.

In the present text, in particular, methacrylic polymer is intended as a polymer obtained from the polymerization of (at least) one methacrylic monomer as defined above.

According to some embodiments, the organic polymer is polymethyl methacrylate.

Advantageously, the composition comprises from 50 wt% (more precisely, from 55 wt%) to 70 wt%, with respect to the overall weight of the composition, of inorganic particles. In particular, the composition comprises up to 65 wt%, with respect to the overall weight of the composition, of inorganic particles.

Advantageously, the inorganic particles have a median diameter (D[v,0.5]) of at least 6µm (in particular up to 80µm). It must be noted that in the literature the median diameter (D[v,0.5]) is at times identified as D₅₀. According to some embodiments, the inorganic particles have a median diameter (D[v,0.5]) from 10µm to 65µm (in particular from 9µm to 60µm).

According to some embodiments, the inorganic particles comprise, in particular consist of, (particles of) compounds of silicon and/or marble and/or particles of aluminium oxide and/or trihydroxide.

The compounds of silicon comprise (in particular consist of) silicates, more specifically at least one material selected from the group consisting of: glass, quartz, cristobalite. The cristobalite can be natural or artificial obtained by treating quartz sands in an oven at around 1880°K.

According to some embodiments, the inorganic particles comprise, in particular consist of, (particles of) aluminium oxide and/or trihydroxide, in particular of corundum (Al₂O₃).

According to some embodiments, the inorganic particles comprise, in particular consist of, particles of marble, which in turn contain carbonates (in particular calcium) and/or silicates.

According to specific embodiments, the inorganic particles comprise (in particular consist of) aluminium trihydroxide.

Advantageously, the composition comprises up to 5 wt% (in particular, up to 2 wt% and, more in particular, up to 1 wt%), with respect to the overall weight of the composition, of at least one crosslinker. More specifically, the composition comprises at least 0.2 wt%, with respect to the overall weight of the composition, of crosslinker.

It must be noted that low quantities of crosslinker cause surfaces that are shiny and not very strong, high percentages cause lacerations.

According to some embodiments, the crosslinker comprises at least one crosslinker with at least two vinyl moieties, in particular methacrylic groups.

According to some embodiments, the crosslinker has at least two acrylic residues. In particular, the crosslinker has at least two methacrylic groups.

According to some embodiments, the crosslinker is selected from the group consisting of: ethylene glycol methacrylate (EGDM), triethylene glycol dimethacrylate (TEGDM), trimethylolpropane trimethacrylate (TMPTM) and mixtures thereof.

Advantageously, the composition comprises up to 5 wt% (in particular up to 3 wt%), with respect to the overall weight of the composition, of silane. In particular, the composition comprises from 0.04 wt% to 1 wt%, with respect to the overall weight of the composition, of silane. More specifically, the composition comprises at least 0.05 wt%, with respect to the overall weight of the composition, of silane.

According to some embodiments, the silane has at least one acrylic residue. In particular, the silane is an acryloxy trialcoxy silane. More in particular, the silane has the following structure,

A-Si-(OR)₃

wherein A is an acrylic residue and R each independently is an alkyl, in particular a C₁-C₃alkyl.

In the present text, unless specified to the contrary, acrylic residue is intended as a molecular portion comprising an acrylic or methacrylic group.

According to some embodiments, the acrylic residue is selected from the group consisting of: methyl methacrylic, ethyl methacrylic, propyl methacrylic, butyl methacrylic, methyl acrylic, butyl acrylic. Advantageously, the acrylic residue is a methyl methacrylic group.

Unless explicitly specified to the contrary, in the present text "Cₓ-C_{y}" refers to a group which is intended as having from x to y carbon atoms.

According to some embodiments, A represents a methacrylic group. Advantageously, each R is a methyl.

In particular, the methacrylic group is selected from the group consisting of: methyl methacrylic, ethyl methacrylic, propyl methacrylic, butyl methacrylic.

Advantageously, the silane is a 3-methacryloxytrimethoxysilane (MEMO). According to specific embodiments, the silane is trimethoxysilyl-propyl methacrylate (Dynasylan MEMO by Degussa^{®})

Advantageously, in the composition there is at least one wetting, antibubble and/or thixotropic additive. According to some embodiments, the wetting, antibubble and/or thixotropic additive is selected from: BYK W 969, BYK A 515, BYK 410 (all by BYK Chemie^{®}) (and a combination thereof). More precisely, the additive is selected in the group consisting of: BYK A 515, BYK 410 (and a combination thereof). According to some embodiments, the additive is BYK W 969.

The composition comprises at least 0.1 wt% (in particular, up to 5 wt%), with respect to the overall weight of the composition, of this additive. More precisely, the composition comprises at least 0.2 wt% (in particular, up to 3 wt% - more precisely, up to 1 wt%), with respect to the overall weight of the composition, of this additive.

The composition comprises at least 0.04 wt% (in particular, up to 1 wt%), with respect to the overall weight of the composition, of water. More precisely, the composition comprises at least 0.05 wt% (in particular, up to 0.5 wt% - more precisely, up to 0.3 wt%), with respect to the overall weight of the composition, of water.

Advantageously, the composition comprises from 0.05 wt% to 1 wt% (in particular, 0.5 wt%), with respect to the overall weight of the composition, of at least one chain transfer agent.

According to some embodiments, the chain transfer agent contains (is) at least one mercaptan, in particular polyfunctionalized.

There are many chain transfer agents containing mercaptans available on the market. For example, the company Arkema offers a large variety of this type of products.

Advantageously, the chain transfer agent contains (is) a compound comprising several -SH moieties.

In particular, the chain transfer agent contains (is) a compound having at least one group having the following structure: 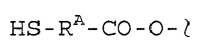 wherein R^{A} is a C₁-C₅ alkyl (in particular C₁-C₃; more precisely, R^{A} is CH₂-CH₂).

According to particular embodiments, the chain transfer agent contains (is) a compound having the following structure:

(HS-R^{A}-CO-O-R^{B})ₙ-CH₄₋ₙ

wherein R^{A} is defined as above; n is an integer from 1 to 4; R^{B} is selected from the group consisting of: C₁-C₅ alkyl (in particular C₁-C₃; more precisely, CH₂), a bond (between the oxygen and carbon).

Advantageously, n is 4.

By the tests carried out, it was found that pentaerythritol tetrakis(3-mercaptopropionate) (CAS number 7575-23-7; for example CTA by AKZO Nobel) functions in a particularly efficient manner.

Advantageously, the composition comprises up to 5 wt% (in particular, up to 3 wt%), with respect to the overall weight of the composition, of organic peroxide. More precisely, the composition comprises up to 1.5 wt%, with respect to the overall weight of the composition, of organic peroxide.

Advantageously, the initiator comprises (in particular, is) an additive selected from the group consisting of: lauryl peroxide, myristyl peroxy dicarbonate, TBPEH (tert butyl-peroxy-2-ethylhexanoate), R913, bis(-tert.butyl cyclohexyl)-peroxycarbonate, tert-butyl peroxymaleate and mixtures thereof. According to specific embodiments, the catalyst comprises (in particular, is) an additive selected from the group consisting of: lauryl peroxide, myristyl peroxy dicarbonate, bis(-tert.butyl cyclohexyl)-peroxycarbonate, tert-butyl peroxymaleate and mixtures thereof.

According to some embodiments, the organic peroxide has a carboxyl moiety. The carboxyl moiety can be either in protonated (-COOH) or deprotonated (-COO⁻) form. In practice, it is possible for a mixture of the two forms (which are in equilibrium with each other) to be formed.

In particular, the peroxide has the formula:

HO-CO-CH=CH-CO-O-O-R¹

wherein R¹ is a C₁-C₁₀ alkyl (in particular C₁-C₅). In accordance with some specific embodiments, R¹ is a C₃-C₅ alkyl (in particular C₃-C₄). Advantageously, R¹ is branched.

This formula is intended to comprise also the deprotonated form ⁻O-CO-CH=CH-CO-O-O-R¹.

Advantageously, the composition comprises up to 1 wt%, with respect to the overall weight of the composition, of ZnO. In particular, the composition comprises from 0.006 wt% to 0.1 wt%, with respect to the overall weight of the composition, of ZnO.

Advantageously, the composition comprises up to 0.05 wt% (in particular, 0.01 wt%), with respect to the overall weight of the mixture, of Ca(OH)₂.

According to specific embodiments, there is provided a catalyst mixture, which is added and mixed to an intermediate mixture. The catalyst mixture constitutes from 0.2 wt% to 5 wt% (in particular, from 0.3 wt% to 1 wt%), with respect to the overall weight of the composition, of composition.

The catalyst mixture comprises from 58 wt% to 77 wt% (more precisely from 55 wt% to 75 wt%), with respect to the overall weight of the mixture, of organic monomer; from 17 wt% to 39 wt% (more precisely from 20 wt% to 35 wt%), with respect to the overall weight of the catalyst mixture, of organic polymer; from 2 wt% to 10 wt% (more precisely from 5 wt% to 9 wt%), with respect to the overall weight of the catalyst mixture, of ZnO; from 0.5 wt% to 2 wt% (more precisely from 1 wt% to 1.5 wt%), with respect to the overall weight of the catalyst mixture, of Ca(OH)₂.

The intermediate mixture constitutes from 95 wt% to 99.8 wt% (in particular, from 99 wt% to 99.7 wt%), with respect to the overall weight of the composition, of composition.

The intermediate mixture comprises the organic monomer, the organic polymer and the other components of the composition. More precisely, the intermediate mixture comprises from 20 wt% to 30 wt%, with respect to the overall weight of the composition, of organic monomer; from 6 wt% to 15 wt%, with respect to the overall weight of the composition, of organic polymer; from 0.05 wt% to 1 wt%, with respect to the overall weight of the composition, of silane; from 0.2 wt% to 1 wt%, with respect to the overall weight of the composition, of crosslinker; from 0.2 wt% to 1.5 wt%, with respect to the overall weight of the composition, of peroxide; from 0.05 wt% to 0.5 wt%, with respect to the overall weight of the composition, of chain transfer agent.

The intermediate mixture is advantageously obtained by mixing first the peroxide, then the chain transfer agent to a base mixture comprising the other components of the intermediate mixture.

The base mixture (and therefore also the intermediate mixture) comprises from 0.02 wt% to 1 wt%, with respect to the overall weight of the composition, of wetting agent; and from 0.05 wt% to 0.3 wt%, with respect to the overall weight of the composition, of water.

Unless explicitly specified to the contrary, the content of the references (articles, texts, patent applications, etc.) cited in this text is fully referred to herein for completeness of description. In particular, the aforesaid references are incorporated herein for reference.

Further characteristics of the present invention shall be more apparent from the description below of two purely illustrative and non-limiting examples.

### Example 1

The present example describes the preparation of a plurality of compositions utilisable in cast moulding processes, and thermometer measurements of the polymerization of the compositions.

There was utilised a base component containing a resin principally of MMA (methyl methacrylate) containing 25% of PMMA (polymethyl methacrylate - with a molecular weight -PM_{w} - from around 90X10³ to around 150X10³), 0.4% of TEGDM (triethylene glycol dimethacrylate - CH₂=C(CH₃)COO-CH₂-CH₂-O-CH₂CH₂-O-CH₂-CH₂-O-CH₂-CH₂OOC(CH₃)C=CH₂), 0.2% of 3-methacryl oxypropyl-trimethoxysilane (H₂C=C (CH₃) COO (CH₂)₃-Si(OCH₃)₃ - commercial product Dynasylan Memo by Degussa), 0.2% of BYK-W 995 (a solution of a copolymer with acid groups - a wetting additive by BYK-Chemie GmbH), 0.15% water, 65% of aluminium trihydroxide (aluminium trihydrate) (the percentages are by weight with respect to the overall weight of the base component).

To the base component identified above there were added and mixed in sequence: tert-butyl peroxymaleate (commercial product Peroxan PM-25 by Pergan Gmbh - (CH₃)₃C-O₂-CO-CH=CH-CO-OH); accelerator CTA by AKZO Nobel (a polyfunctional mercaptan); and a catalyst mixture containing in variable percentages ZnO and Ca(OH)₂. The catalyst mixture comprised a resin with 75 wt% (with respect to the overall weight of this resin) of MMA and 25 wt% (with respect to the overall weight of this resin) of PMMA.

Immediately after preparing each composition as described above, 0.5 kg of the same composition was inserted in a rectangular shaped mould similar to the one described in the Italian patent application BO2007A000325 in order to obtain samples of polymerized material of parallelepiped shape.

Indicated below is the content of each composition tested and the measurements carried out using PLC probe detectors during polymerization.

### Composition A

Composition A had the content indicated in Table 1 below (the percentages are by weight with respect to the overall weight of the composition).

**Table 1**

| | |
|---|---|
| resin at 25% PMMA | 31.70% |
| TEGDM | 0.13% |
| silane | 0.06% |
| BYK-W 995 | 0.06% |
| H₂O | 0.10% |
| colour paste | 2% |
| aluminium trihydrate | 65% |
| peroxide | 0.40% |
| mercaptan | 0.17% |
| catalyst mixture | 0.44% |

Wherein the catalyst mixture comprised 93 wt% of resin (of MMA at 25 wt% of PMMA), 6 wt% of ZnO and 1 wt% of Ca(OH)₂ (these are percentages by weight with respect to the overall weight of the catalyst mixture).

The composition exhibited the following characteristics:

**Table 1'**

| | |
|---|---|
| Gel time | 4.5 min. |
| Peak Temperature | 81.5°C |
| Peak Time | 31 min. |

The gel time indicates the time that is employed for the composition to gel, after which it can no longer be handled (for example to be inserted in a mould). Ideally, the gel time must be neither too short nor too long; the time should be sufficient to insert the composition into the mould but not excessively long to avoid extending the production times.

The Peak Temperature is the maximum temperature that is reached by the composition during polymerization.

### Composition B

Composition B had the content indicated in Table 2 below (the percentages are by weight with respect to the overall weight of the composition).

**Table 2**

| | |
|---|---|
| Resin at 25% PMMA | 31.70% |
| TEGDM | 0.13% |
| Silane | 0.06% |
| BYK-W 995 | 0.06% |
| H₂O | 0.10% |
| Colour paste | 2% |
| aluminium trihydrate | 65% |
| peroxide | 0.40% |
| mercaptan | 0.17% |
| catalyst mixture | 0.44% |

Wherein the catalyst mixture comprised 85 wt% of resin (of MMA at 25 wt% of PMMA), 7.5 wt% of ZnO and 7.5 wt% of Ca(OH)₂ (these are percentages by weight with respect to the overall weight of the catalyst mixture).

The composition exhibited the following characteristics:

**Table 2'**

| | |
|---|---|
| Gel time | 5.5 min. |
| Peak Temperature | 87.2°C |
| Peak Time | 31 min. |

### Composition C

Composition C had the content indicated in Table 3 below (the percentages are by weight with respect to the overall weight of the composition).

**Table 3**

| | |
|---|---|
| Resin at 25% PMMA | 31.79% |
| TEGDM | 0.13% |
| Silane | 0.06% |
| BYK-W 995 | 0.06% |
| H₂O | 0.10% |
| Colour paste | 2% |
| aluminium trihydrate | 65% |
| peroxide | 0.40% |
| mercaptan | 0.17% |
| catalyst mixture | 0.35% |

Wherein the catalyst mixture comprised 85 wt% of resin (of MMA at 25 wt% of PMMA), 7.5 wt% of ZnO and 7.5 wt% of Ca(OH)₂ (these are percentages by weight with respect to the overall weight of the catalyst mixture).

The composition exhibited the following characteristics:

**Table 3'**

| | |
|---|---|
| Gel time | 5 min. |
| Peak Temperature | 84.3°C |
| Peak Time | 42 min. |

### Composition D

Composition D had the content indicated in Table 4 below (the percentages are by weight with respect to the overall weight of the composition).

**Table 4**

| | |
|---|---|
| Resin at 25% PMMA | 31.32% |
| TEGDM | 0.13% |
| Silane | 0.06% |
| BYK-W 995 | 0.06% |
| H₂O | 0.05% |
| Colour paste | 2% |
| aluminium trihydrate | 65% |
| peroxide | 0.40% |
| mercaptan | 0.17% |
| catalyst mixture | 0.88% |

Wherein the catalyst mixture comprised 85 wt% of resin (of MMA at 25 wt% of PMMA), 7.5 wt% of ZnO and 7.5 wt% of Ca(OH)₂ (these are percentages by weight with respect to the overall weight of the catalyst mixture).

The composition exhibited the following characteristics:

**Table 4'**

| | |
|---|---|
| Gel time | 4.5 min. |
| Peak Temperature | 91.2°C |
| Peak Time | 30 min. |

### Composition E

Composition E had the content indicated in Table 5 below (the percentages are by weight with respect to the overall weight of the composition).

**Table 5**

| | |
|---|---|
| Resin at 25% PMMA | 31.53% |
| TEGDM | 0.13% |
| Silane | 0.06% |
| BYK-W 995 | 0.06% |
| H₂O | 0.05% |
| Colour paste | 2% |
| aluminium trihydrate | 65% |
| peroxide | 0.40% |
| mercaptan | 0.17% |
| catalyst mixture | 0.66% |

Wherein the catalyst mixture comprised 85 wt% of resin (of MMA at 25 wt% of PMMA), 7.5 wt% of ZnO and 7.5 wt% of Ca(OH)₂ (these are percentages by weight with respect to the overall weight of the catalyst mixture).

The composition exhibited the following characteristics:

**Table 5'**

| | |
|---|---|
| Gel time | 4 min. |
| Peak Temperature | 89.2°C |
| Peak Time | 39 min. |

### Composition F

Composition F had the content indicated in Table 6 below (the percentages are by weight with respect to the overall weight of the composition).

**Table 6**

| | |
|---|---|
| Resin at 25% PMMA | 31.69% |
| TEGDM | 0.13% |
| Silane | 0.06% |
| BYK-W 995 | 0.06% |
| H₂O | 0.05% |
| Colour paste | 2% |
| aluminium trihydrate | 65% |
| peroxide | 0.40% |
| mercaptan | 0.17% |
| catalyst mixture | 0.50% |

Wherein the catalyst mixture comprised 85 wt% of resin (of MMA at 25 wt% of PMMA), 7.5 wt% of ZnO and 7.5 wt% of Ca(OH)₂ (these are percentages by weight with respect to the overall weight of the catalyst mixture).

The composition exhibited the following characteristics:

**Table 6'**

| | |
|---|---|
| Gel time | 5.5 min. |
| Peak Temperature | 80.2°C |
| Peak Time | 37 min. |

### Composition G

Composition G had the content indicated in Table 7 below (the percentages are by weight with respect to the overall weight of the composition).

**Table 7**

| | |
|---|---|
| Resin at 25% PMMA | 31.75% |
| TEGDM | 0.13% |
| Silane | 0.06% |
| BYK-W 995 | 0.06% |
| H₂O | 0.05% |
| Colour paste | 2% |
| aluminium trihydrate | 65% |
| peroxide | 0.40% |
| mercaptan | 0.17% |
| catalyst mixture | 0.44% |

Wherein the catalyst mixture comprised 85 wt% of resin (of MMA at 25 wt% of PMMA), 7.5 wt% of ZnO and 7.5 wt% of Ca(OH)₂ (these are percentages by weight with respect to the overall weight of the catalyst mixture).

The composition exhibited the following characteristics:

**Table 7'**

| | |
|---|---|
| Gel time | 7 min. |
| Peak Temperature | 91.9°C |
| Peak Time | 58 min. |

### Composition H

Composition H had the content indicated in Table 8 below (the percentages are by weight with respect to the overall weight of the composition).

**Table 8**

| | |
|---|---|
| Resin at 25% PMMA | 31.75% |
| TEGDM | 0.13% |
| Silane | 0.06% |
| BYK-W 995 | 0.06% |
| H₂O | 0.05% |
| Colour paste | 2% |
| aluminium trihydrate | 65% |
| peroxide | 0.50% |
| mercaptan | 0.17% |
| catalyst mixture | 0.44% |

Wherein the catalyst mixture comprised 85 wt% of resin (of MMA at 25 wt% of PMMA), 7.5 wt% of ZnO and 7.5 wt% of Ca(OH)₂ (these are percentages by weight with respect to the overall weight of the catalyst mixture).

The composition exhibited the following characteristics:

**Table 8'**

| | |
|---|---|
| Gel time | 6.5 min. |
| Peak Temperature | 65.8°C |
| Peak Time | 1 hour 4 min. |

### Composition I

Composition I had the content indicated in Table 9 below (the percentages are by weight with respect to the overall weight of the composition).

**Table 9**

| | |
|---|---|
| Resin at 25% PMMA | 31.24% |
| TEGDM | 0.13% |
| Silane | 0.06% |
| BYK-W 995 | 0.06% |
| H₂O | 0.05% |
| Colour paste | 2% |
| aluminium trihydrate | 65% |
| peroxide | 0.50% |
| mercaptan | 0.17% |
| catalyst mixture | 0.85% |

Wherein the catalyst mixture comprised 94 wt% of resin (of MMA at 25 wt% of PMMA), and 6 wt% of ZnO (these are percentages by weight with respect to the overall weight of the catalyst mixture).

The composition exhibited the following characteristics:

**Table 9'**

| | |
|---|---|
| Gel time | 6.5 min. |
| Peak Temperature | 61.6°C |
| Peak Time | 43 min. |

Results and analysis of the tests carried out

All the compositions polymerized.

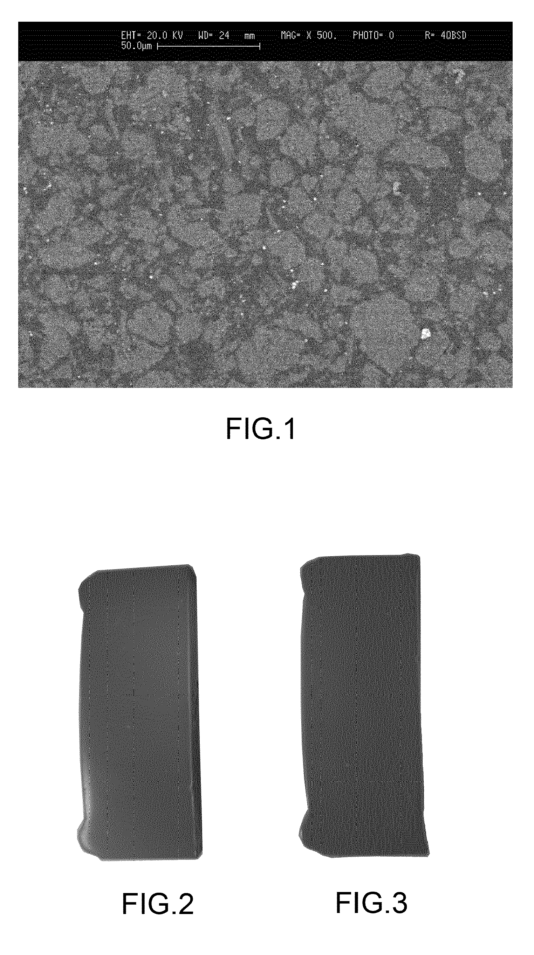

The samples thus obtained all exhibited the substantial absence of aesthetic defects visible to the naked eye. The surface of the samples analysed under the scanning electron microscope (SEM) had the structure indicated in Fig. 1.

The compositions A-H polymerized more rapidly than the composition I. In this regard, it must be noted that a low polymerizing time generally implies better mechanical properties (for example: tensile and flexural elastic modulus, tensile and flexural fracture stress of the samples obtained).

The mechanical properties of the samples obtained following polymerization were tested and proved to be excellent and fully compatible with use for producing articles for furnishing bathrooms and kitchens. The best mechanical properties were observed for the material obtained from the composition G. The materials obtained from the compositions D-H exhibited better mechanical properties with respect to the materials obtained from the compositions A-C, which exhibited better mechanical properties than the material obtained from the composition I.

### Example 2

The present example describes the preparation of a plurality of compositions (comparison compositions not part of the present invention) utilisable in cast moulding processes, and thermometer measurements of the polymerization of the compositions.

The same base component indicated in the previous example was utilised. Four tests were carried out. For each test, the components were added and mixed to the base component in the order indicated in the tables below. The percentages indicated are by weight with respect to the overall weight of each composition obtained, which is polymerized.

Immediately after preparing each composition as described, 0.5 kg of the same composition was inserted in a rectangular shaped mould similar to the one described in the Italian patent application BO2007A000325 in order to obtain samples of polymerized material of parallelepiped shape.

### Test 1

**Table 10**

| | |
|---|---|
| EDTA | 0.1% |
| Ca(OH)₂ | 0.1% |
| R913 | 0.2% |
| TBPM | 0.3% |

R913 indicates the accelerator CTA by AKZO Nobel. TBPM indicates tert-butyl peroxymaleate

### Test 2

**Table 11**

| | |
|---|---|
| Ca(OH)₂ | 0.1% |
| R913 | 0.2% |
| TBPM | 0.3% |
| EDTA | 0.1% |

### Test 3

**Table 12**

| | |
|---|---|
| Citric Acid | 0.1% |
| Ca(OH)₂ | 0.1% |
| R913 | 0.2% |
| TBPM | 0.3% |

### Test 4

**Table 13**

| | |
|---|---|
| Ca(OH)₂ | 0.1% |
| R913 | 0.2% |
| TBPM | 0.3% |
| Citric acid | 0.1% |

Fig. 2 shows the sample obtained following polymerization for Test 1.

Fig. 3 shows the sample obtained following polymerization for Test 2.

Fig. 4 shows the sample obtained following polymerization for Test 3.

Fig. 5 shows the sample obtained following polymerization for Test 4.

All the samples obtained have white spots (lighter than the remaining part of the sample) visible to the naked eye (even if this may not be completely perceptible from the attached figures). Fig. 6 shows a SEM photograph of a white spot.

The use of EDTA reduces, but not in a satisfactory manner, the formation of white spots.

### Example 3

The present example describes the preparation of a plurality of compositions (comparison compositions not part of the present invention) utilisable in cast moulding processes, and thermometer measurements of the polymerization of the compositions.

The same base component indicated in the previous example was utilised. Various tests were carried out, adding in this order:
1.a reagent (selected in Table 14 in the percentage indicate therein) mixed for 10 minutes with vertical stirring;
2. R913 0.2% mixed for 1.5 minutes with the spatula;
3. TBPM 0.3% mixed for 30 seconds with the spatula.

**Table 14**

| Test N°. | Reagent | Percentage |
|---|---|---|
| 1+ | Calcium D-Gluconate Monohydrate | 0.1% |
| 2+ | Calcium Chloride | 0.1% |
| 3+ | Calcium Oxalate Monohydrate | 0.1% |
| 4 | Calcium Carbonate | 0.1% |
| 5+ | Calcium Acetate | 0.1% |
| 6 | Calcium Acetate | 1% |
| 7+ | Calcium Acetate | 5% |
| 8 | Calcium Hydrogen Phosphate | 0.1% |
| 9* | Calcium Oxide | 0.1% |
| 10* | Calcium Oxide | 0.2% |
| 11* | Calcium Oxide | 0.3% |
| 12* | Calcium Oxide | 0.5% |
| 13 | Calcium Dihydrogen Phosphate | 0.1% |
| 14 | Sodium Hydroxide | 0.1% |
| 15 | Sodium Carbonate Monohydrate | 0.1% |
| 16 | Sodium Carbonate Monohydrate | 1% |
| 17+ | Sodium Chloride | 0.1% |
| 18+ | Sodium Chloride | 1% |
| 19 | Sodium Citrate | 0.1% |
| 20 | Sodium Citrate | 1% |
| 21 | Sodium Stearate | 0.1% |
| 22 | Sodium Stearate | 1% |
| 23 | Cobalt Octanoate | 0.1% |
| 24+ | Lead Octanoate | 0.1% |
| 25* | Magnesium Octanoate | 0.1% |
| 26+ | Zinc Octanoate | 0.1% |
| 27 | Tin Octanoate | 0.1% |
| 28 | Calcium Octanoate | 0.1% |
| 29* | Manganese Octanoate | 0.1% |
| 30* | Zirconium Octanoate | 0.1% |

The percentages indicated above are by weight with respect to the overall weight of the final compositions.

The compositions indicated with the symbol * polymerized. The compositions indicated with the Symbol + partially polymerized. The other compositions did not polymerize.

All the compositions that polymerized or partially polymerized resulted in obtaining samples in which defects of light colour were present.

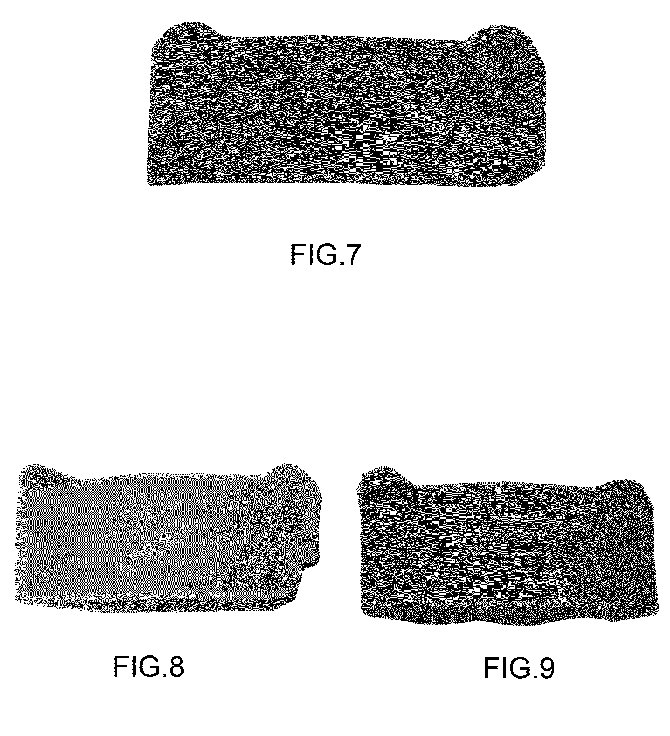

By way of example, Fig. 7 is a photograph of a section of the sample obtained during Test 9.

Figs. 8 and 9 relate to the samples obtained following Tests 26 and 24, respectively. Zinc Octanoate catalyses the sample in a much longer time and there are significant lighter patches along all the external margins of the section together with many internal white marks. The sample obtained with Lead Octoanate has evident surface lightening and the presence of white marks inside the sample.

## Claims

1. A process of making a composite material; the process comprises:
a step of mixing a composition comprising from 15 wt% to 35 wt%, with respect to the overall weight of the composition, of at least one polymerizable organic monomer; from 5 wt% to 18 wt%, with respect to the overall weight of the composition, of at least one organic polymer; from 50 wt% to 70 wt%, with respect to the overall weight of the composition, of inorganic particles, which have a median diameter (D[v,0.5]) up to 100 µm; from 0.1 wt% to 2 wt%, with respect to the overall weight of the composition, of at least one crosslinker; from 0.04 wt% to 3 wt%, with respect to the overall weight of the composition, of at least one silane having at least one vinyl moiety; from 0.04 wt% to 3 wt%, with respect to the overall weight of the composition, of at least one chain transfer agent; at least 0.1 wt%, with respect to the overall weight of the composition, of an organic peroxide with a carboxyl moiety; and at least 0.005 wt%, with respect to the overall weight of the composition, of ZnO;
and a polymerizing step, during which the polymerizable organic monomer polymerizes so as to obtain the composite material.

2. The process according to claim 1, wherein the composition comprises from 0.0015 wt% to 0.05 wt%, with respect to the overall weight of the mixture, of Ca(OH)₂.

3. The process according to claim 1 or 2, wherein the crosslinker has at least two vinyl moieties.

4. The process according to one of the preceding claims, wherein the crosslinker has at least two acrylic residues; the silane has at least one acrylic residue; the polymerizable organic monomer comprises at least one acrylic monomer; the organic polymer comprises at least one acrylic polymer; the chain transfer agent is a mercaptan.

5. The process according to claim 4, wherein the polymerizable organic monomer is a methacrylic monomer; the organic polymer is a methacrylic polymer; the crosslinker has at least two methacrylic groups; the silane has at least one methacrylic group.

6. The process according to claim 5, wherein the polymerizable organic monomer is methyl methacrylate; the organic polymer is polymethyl methacrylate; the crosslinker is selected from the group consisting of: ethylene glycol methacrylate (EGDM), triethylene glycol dimethacrylate (TEGDM), trimethylolpropane trimethacrylate (TMPTM) and mixtures thereof.

7. The process according to any of the preceding claims, wherein the silane is acryloxy trialcoxy silane having, in particular, the following structure,
A-Si-(OR)₃
wherein A is an acrylic residue and R, each independently of the others, is an alkyl, in particular a C₁-C₃ alkyl; the organic peroxide has formula
HO-CO-CH=CH-CO-O-O-R¹
wherein R¹ is a C₁-C₅ alkyl; the chain transfer agent is a mercaptan with the following structure:
(HS-R^{A}-CO-O-R^{B}) ₙ-CH₄₋ₙ
wherein R^{A} is a C₁-C₅ alkyl; n is an integer from 1 to 4; R^{B} is selected from the group consisting of C₁-C₅ alkyl and a bond (a single bond between the oxygen and carbon atoms).

8. The process according to any of the preceding claims, wherein the composition comprises from 0.2 wt% to 1 wt%, with respect to the overall weight of the composition, of a wetting additive; and from 0.05 wt% to 0.3 wt%, with respect to the overall weight of the composition, of water.

9. The process according to any of the preceding claims, wherein the composition comprises from 20 wt% to 30 wt%, with respect to the overall weight of the composition, of the polymerizable organic monomer; from 6 wt% to 15 wt%, with respect to the overall weight of the composition, of the organic polymer; from 55 wt% to 65 wt%, with respect to the overall weight of the composition, of the inorganic particles, which have a median diameter (D[v,0.5]) from 9µm to 60µm; from 0.2 wt% to 1 wt%, with respect to the overall weight of the composition, of the crosslinker; from 0.05 wt% to 1 wt%, with respect to the overall weight of the composition, of silane; from 0.05 wt% to 0.5 wt%, with respect to the overall weight of the composition, of the chain transfer agent; up to 1.0 wt%, with respect to the overall weight of the composition, of the organic peroxide; from 0.006 wt% to 0.1 wt%, with respect to the overall weight of the composition, of ZnO; up to 0.01 wt%, with respect to the overall weight of the mixture, of Ca(OH)₂; the inorganic particles comprising aluminium trioxide.

10. The process according to any of the preceding claims, wherein there is provided a catalyst mixture comprising from 58 wt% to 77 wt%, with respect to the overall weight of the mixture, of the organic monomer; from 17 wt% to 39 wt%, with respect to the overall weight of the catalyst mixture, of the organic polymer; from 2 wt% to 10 wt%, with respect to the overall weight of the catalyst mixture, of ZnO; from 0.5 wt% to 2 wt%, with respect to the overall weight of the catalyst mixture, of Ca(OH)₂;
the catalyst mixture is added and mixed to an intermediate mixture comprising the organic monomer, the organic polymer and the other components of the composition so as to obtain the composition; the catalyst mixture forms from 0.2 wt% to 5 wt%, with respect to the overall weight of the composition, of the composition.

11. A material obtained according to the process of any of the preceding claims.
